# EUROPÄISCHE PATENTANMELDUNG

(11) **EP 1 526 047 A1**
(43) Veröffentlichungstag der Anmeldung: **27.04.2005**
(21) Anmeldenummer: 04030965.0
(22) Anmeldetag: 02.07.2002
(51) Int. Cl.: B60R 22/34, B60R 22/28

(54) **Gurtaufroller**

(30) Priorität: 10.07.2001 DE 20111409 U
(62) Teilanmeldung aus: 02014089.3
(71) Anmelder: TRW Automotive GmbH, 73553 Alfdorf (DE)
(72) Erfinder: Wier, Franz, 73571 Göggingen (DE)
(74) Vertreter: Strass, Jürgen, Dipl.-Phys.

(57) **Zusammenfassung**

Ein Gurtaufroller umfaßt einen Sicherheitsgurt (14) und eine Gurtspule (12). Die Gurtspule (12) umfaßt einen Torsionsstab (34) und einen Spulenkörper (18). Der Spulenkörper (18) weist eine Ausnehmung (50) auf. In der Ausnehmung (50) ist ein Formteil (52) vorgesehen, mit dem ein Ende des Sicherheitsgurts (14) in der Ausnehmung (50) befestigt werden kann. Das Formteil (52) liegt am Torsionsstab an, um sich abzustützen, wenn es durch die Zugkraft des Sicherheitsgurts 14 belastet ist. Der Sicherheitsgurt (14) ist in einem Freiraum (58) zwischen dem Torsionsstab (34) und dem Spulenkörper (18) am Torsionsstab (34) vorbeigeführt. Im Spulenkörper (18) ist ein Schlitz (56) für den Gurtbandaustritt vorgesehen, der mindestens annähernd diametral gegenüber der Ausnehmung (50) angeordnet ist.

## Beschreibung

Die Erfindung betrifft einen Gurtaufroller mit einem Sicherheitsgurt und einer Gurtspule, wobei die Gurtspule einen Torsionsstab und einen Spulenkörper umfaßt, der Spulenkörper eine Ausnehmung aufweist, in der Ausnehmung ein Formteil vorgesehen ist, mit dem ein Ende eines Sicherheitsgurts in der Ausnehmung befestigt werden kann, und das Formteil am Torsionsstab anliegt, um sich abzustützen, wenn es durch die Zugkraft des Sicherheitsgurts belastet ist.

Aus der DE 296 05 115 ist ein Gurtaufroller mit einer Gurtspule bekannt, bei der sich ein Formteil an einer Ausnehmung im Körper der Gurtspule abstützt. Der Spulenkörper der Gurtspule muß daher stabil genug sein, um die Zuglast vom Sicherheitsgurt aufnehmen zu können.

Ein Gurtaufroller der eingangs genannten Art ist aus der GB-A-2 354 208 bekannt. Die im Sicherheitsgurt wirkende Kraft wird auf die Achse der Gurtspule übertragen, indem der Sicherheitsgurt in einem den Spulenkörper durchsetzenden Kanal geführt und unter einem Winkel von vorzugsweise 90° um die Spulenachse gelegt ist.

Aufgabe der Erfindung ist es, einen Gurtaufroller mit einer leichten und unaufwendig herstellbaren Gurtspule zu schaffen, bei dem die vom Sicherheitsgurt in den Gurtaufroller eingeleitete Kraft optimal aufgenommen wird.

Diese Aufgabe wird gelöst durch einen Gurtaufroller der eingangs genannten Art, bei dem der Sicherheitsgurt in einem Freiraum zwischen dem Torsionsstab und dem Spulenkörper am Torsionsstab vorbeigeführt ist und im Spulenkörper ein Schlitz für den Gurtbandaustritt vorgesehen ist, der mindestens annähernd diametral gegenüber der Ausnehmung angeordnet ist.

Beim erfindungsgemäßen Gurtaufroller kann der Torsionsstab die Zuglast aus dem Sicherheitsgurt aufnehmen. Der Spulenkörper der Gurtspule dagegen muß nicht so stabil sein wie ein Spulenkörper, der die gesamte Zuglast aus dem Sicherheitsgurt auszuhalten hat. Dies führt im Vergleich zu Gurtspulen mit stabilerem Spulenkörper zu einer erheblichen Gewichtsersparnis, da zum einen leichtere Materialien für den Spulenkörper Verwendung finden können und zum anderen der Durchmesser des Spulenkörpers kleiner gewählt werden kann.

Gemäß einer bevorzugten Ausführungsform weist der Torsionsstab zwei Nabenabschnitte auf, mit denen er am Spulenkörper angreift, und einen Achsenabschnitt, der die beiden Nabenabschnitte miteinander verbindet, wobei sich das Formteil nur an den Nabenabschnitten am Torsionsstab abstützt. Auf diese Weise wird die Zuglast des Sicherheitsgurtes nur an den Nabenabschnitten in den Torsionsstab eingeleitet, so daß ein Durchbiegen desselben, das die primäre Funktion des Torsionsstabes, nämlich die Gurtkraftbegrenzung, beeinträchtigen würde, vermieden wird. Über die Nabenabschnitte kann der Torsionsstab die Last jedoch auf relativ kurzem Wege an die Gurtspule abgeben, von wo aus sie durch die Lagerung vom Gehäuse des Gurtaufrollers aufgenommen wird.

Gemäß einem weiteren Aspekt der Erfindung ist vorgesehen, daß ein Ende des Sicherheitsgurtes eine Schlaufe bildet, welche das Formteil umschließt. Ein derartiger Gurtaufroller kann kleiner gebaut werden, da bei einer Gurtspule mit einem kleineren Durchmesser des Spulenkörpers der Platzbedarf für den Gurtwickel verringert ist.

Weitere vorteilhafte Ausführungsformen der Erfindung ergeben sich aus den Unteransprüchen.

Die Erfindung wird nachfolgend anhand bevorzugter Ausführungsformen ausführlich beschrieben. Dabei wird Bezug genommen auf die beigefügten Zeichnungen, in welchen zeigt:
- Figur 1 eine perspektivische Ansicht einer ersten Ausführungsform eines erfindungsgemäßen Gurtaufrollers;
- Figur 2 einen Längsschnitt durch die Gurtspule des Gurtaufrollers aus Figur 1;
- Figur 3 einen Querschnitt durch die Gurtspule aus Figur 2 mit darin befestigtem Gurtband;
- Figur 4 einen Querschnitt durch die Gurtspule aus Figur 2 ohne Gurtband;
- Figur 5 einen Querschnitt durch eine Gurtspule gemäß einer zweiten Ausführungsform der Erfindung;
- Figur 6 einen Querschnitt durch eine Gurtspule gemäß einer dritten Ausführungsform der Erfindung;
- Figur 7 einen Querschnitt durch eine Gurtspule gemäß einer vierten Ausführungsform der Erfindung;
- Figur 8 einen Längsschnitt durch einen Gurtaufroller gemäß einer fünften Ausführungsform der Erfindung;
- Figur 9 einen Längsschnitt durch das Trägerteil der Gurtspule aus Figur 8;
- Figur 10 einen Längsschnitt durch ein alternatives Trägerteil einer Gurtspule für einen erfindungsgemäßen Gurtaufroller;
- Figur 11 einen vergrößerten Querschnitt eines Teils einer sechsten Ausführungsform der Erfindung; und
- Figur 12 eine perspektivische Ansicht eines Gurtaufrollers gemäß einer siebten Ausführungsform der Erfindung.

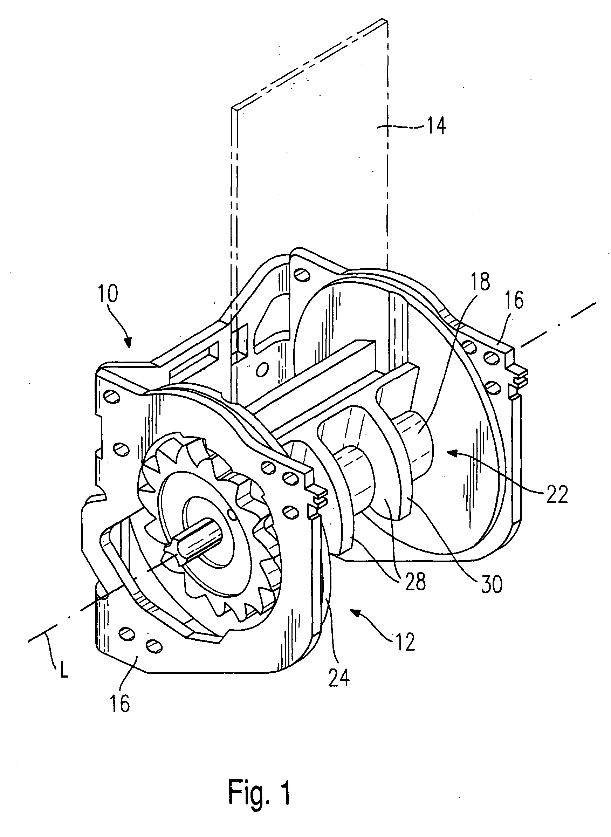

In Figur 1 ist ein Rahmen 10 eines erfindungsgemäßen Gurtaufrollers dargestellt, in dem eine Gurtspule 12 für einen Sicherheitsgurt 14 gelagert ist. Zur besseren Übersicht sind die für die Beschreibung der Erfindung nicht notwendigen Bestandteile des Gurtaufrollers weggelassen. Der Rahmen 10 besteht aus einem U-förmig gebogenen Blech mit einer Rückwand und zwei Seitenwänden 16, zwischen denen die Gurtspule 12 gelagert ist.

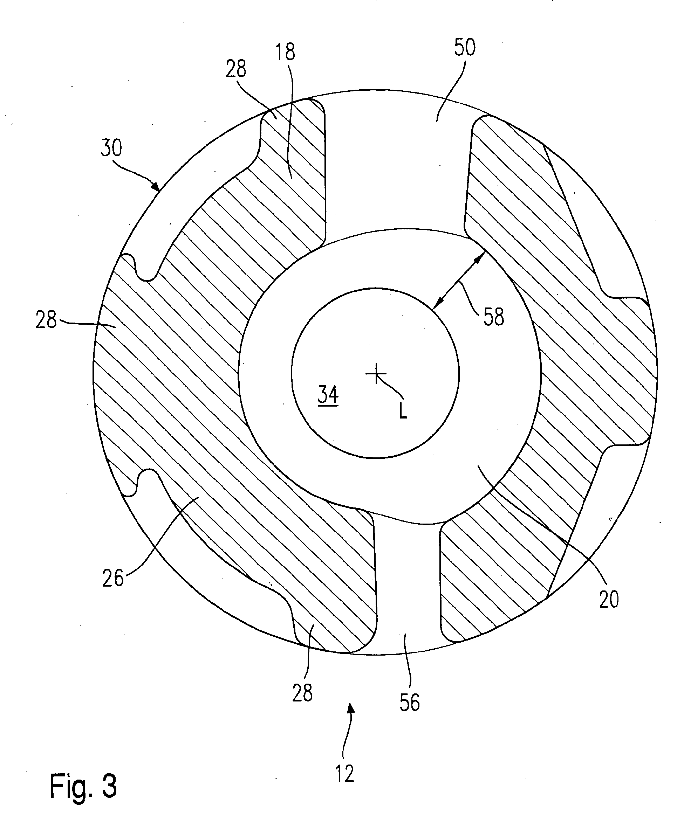

Die Gurtspule 12 hat einen Spulenkörper 18, eine Mittelachse L sowie an einem Ende einen ersten Flansch 22 und am gegenüberliegenden anderen Ende einen zweiten Flansch 24. Der Spulenkörper ist mit einem Hohlraum 20 (Figur 3) versehen, durch den die Achse L verläuft. Der Spulenkörper 18 besteht aus einem zylindrischen Grundkörper 26, der den Hohlraum 20 umgibt und an seiner Außenseite mit Rippen 28 versehen ist, die so gestaltet sind, daß die Außenkontur des Spulenkörpers 18 eine Trommelfläche 30 bildet, auf welcher der Sicherheitsgurt 14 aufgewickelt werden kann. Die Ausbildung der Rippen 28 gestattet eine Material- und damit Gewichtseinsparung bei gegebenem Durchmesser für die Gurtspule.

Der erste Flansch 22 ist auf seiner dem Spulenkörper 18 abgewandten Seite mit einer zylindrischen, zur Achse L konzentrischen Ausstülpung 32 ausgestattet, mit welcher die Gurtspule 12 drehbar in einer Öffnung in einer der Seitenwände 16 des Rahmens 10 gelagert ist. Durch den Hohlraum 20 des Spulenkörpers 18 erstreckt sich ein Torsionsstab 34 mit zwei Nabenabschnitten 36 und 38, mit denen der Torsionsstab 34 an dem Spulenkörper 18 angreift, und mit einem Achsenabschnitt 40, der die beiden Nabenabschnitte miteinander verbindet. Der erste Nabenabschnitt 36 greift drehfest am ersten Flansch 22 an. Ein Sperrad 42, welches mit Zähnen 44 versehen ist, ist drehfest an dem zweiten Nabenabschnitt 38 angebracht, beispielsweise mittels einer Verzahnung 45. So kann der Torsionsstab 34 in bekannter Weise die Funktion einer Gurtkraftbegrenzung ausführen, indem das Sperrad 42 mit seinen Zähnen 44 in Ausnehmungen 46 am Rahmen 10 eingreift, während die Gurtspule 12 durch die Zugkraft des Sicherheitsgurts 14 unter Tordierung des Torsionsstabes 34 sich weiterdrehen kann, wobei der Sicherheitsgurt 14 abgerollt wird.

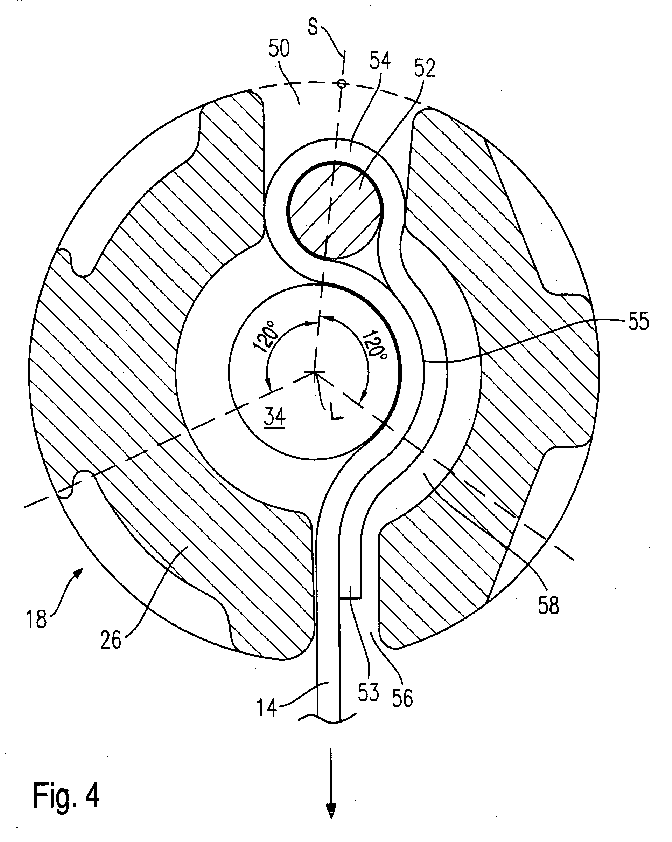

Wie in den Figuren 4 bis 7 zu sehen ist, ist im Spulenkörper 18 eine Ausnehmung 50 vorgesehen, in welcher sich ein Formteil 52 befindet. Ein Ende 53 des Sicherheitsgurtes 14 bildet eine Schlaufe 54, welche das Formteil 52 umschließt. Die Schlaufe 54 kann in verschiedener Weise gebildet sein, beispielsweise durch Vernähen, Verschweißen oder Verkleben des Endes 53 mit dem Sicherheitsgurt 14 an einer oder meherern Verbindungsstellen 55. Radial gegenüber der Ausnehmung 50 befindet sich ein Schlitz 56 im Spulenkörper 18, durch den der Sicherheitsgurt 14 austreten kann. Dabei ist der Sicherheitsgurt 14 in einem Freiraum 58 zwischen Torsionsstab 34 und Spulenkörper 18 am Torsionsstab 34 vorbeigeführt. Die Größe des Freiraums 58 ist so gewählt, daß die Schlaufe 54 leicht durchgeführt werden kann, das Formteil 52 jedoch nicht hindurchtreten kann.

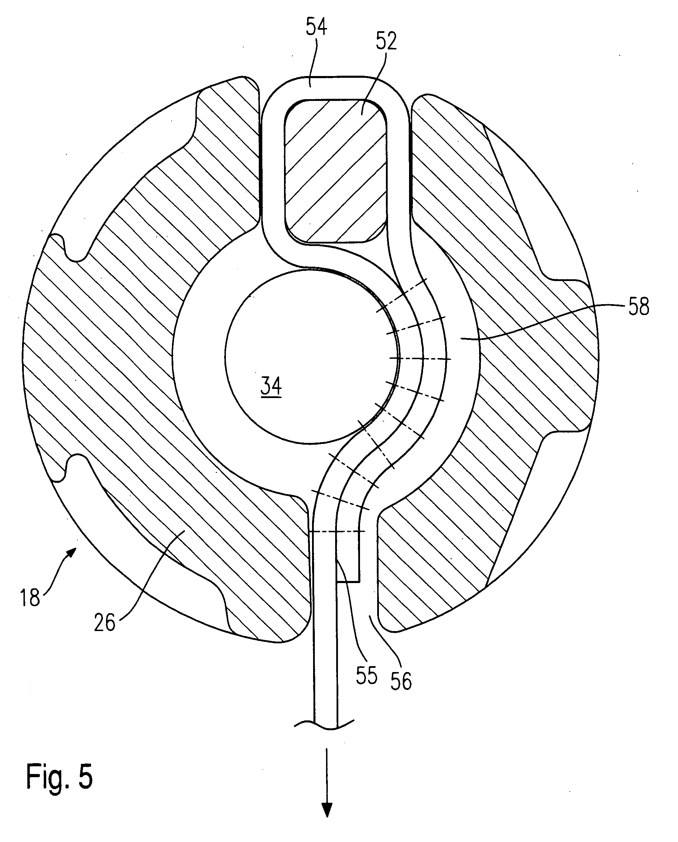

Daher kann, wenn am Sicherheitsgurt 14 eine Zugkraft angreift (siehe Pfeil in den Figuren 4 bis 7) das Formteil 52 nicht in den Freiraum 58 gezogen werden. Es stützt sich daher am Torsionsstab 34 ab, so daß dieser den größten Teil der Zuglast aus dem Sicherheitsgurt 14 aufnimmt. Vorteilhafterweise ist die Form der Ausnehmung 50 so gewählt, daß ein Formteil 52 mit polygonalem Querschnitt (Figuren 5 bis 7) durch die Zugkraft des Sicherheitsgurts nur geringfügig verkippen kann, so daß eine Keilwirkung im Freiraum 58 zwischen dem Torsionsstab 34 und dem Spulenkörper 18 weitgehend vermieden wird.

Bei der Gestaltung der Gurtspule sind die folgenden Merkmale wichtig: Die Linie zwischen den Punkten S (Schnittpunkt der Mittellinie der Ausnehmung 50 mit der Umfangslinie der Gurtspule) und dem Punkt L (Mittelachse der Gurtspule) muß den Querschnitt des Formteils 52 schneiden oder wenigstens den Umfang tangieren. Der Abstand zwischen der Linie S-L und einer parallelen Tangente an den Umfang des Formteils muß dabei größer als 1 mm sein, und der Schlitz 56 für den Gurtbandaustritt ist mindestens annähernd diametral gegenüber der Ausnehmung 50 angeordnet. Die gedachte Mittellinie des Schlitzes für den Gurtbandaustritt ist dabei um mindestens 120° gegenüber der Linie S-L verschwenkt.

Wenn das Gurtsystem keinen Gurtumlenker aufweist, beträgt die projezierte Stützbreite des Formteils 52 mindesten 5,5 mm bei einer Festigkeit des Formteils von 900 N/mm². Bei niedrigerer Festigkeit beträgt die projezierte Stützbreite mindestens 7 mm. Bei einem Gurtsystem mit Umlenker beträgt die Mindeststützbreite des Formteils 52 mindestens 7 mm bei einer Festigkeit von 900 N/mm^{2,} bei geringerer Festigkeit beträgt die projezierte Breite mindestens 9 mm.

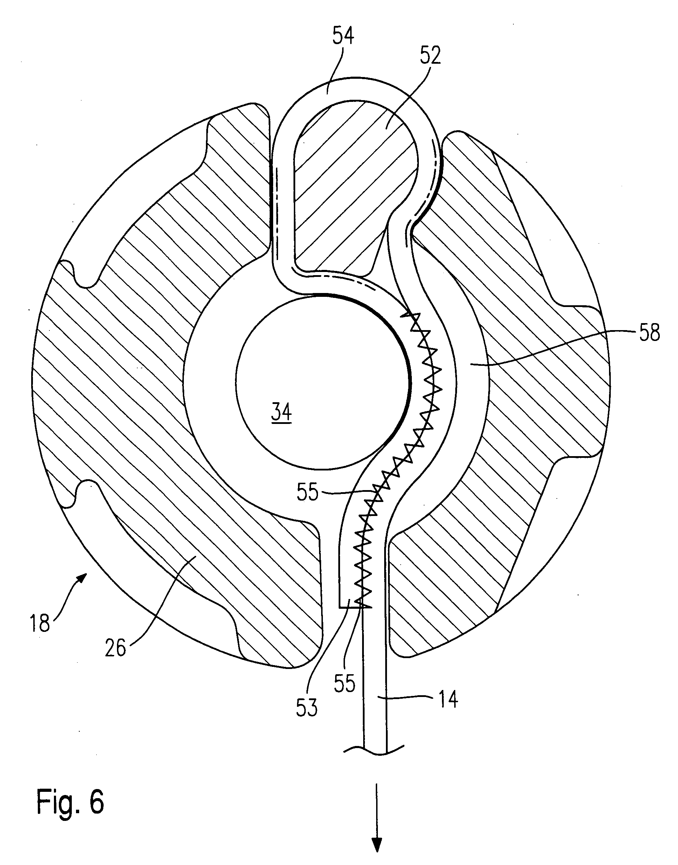

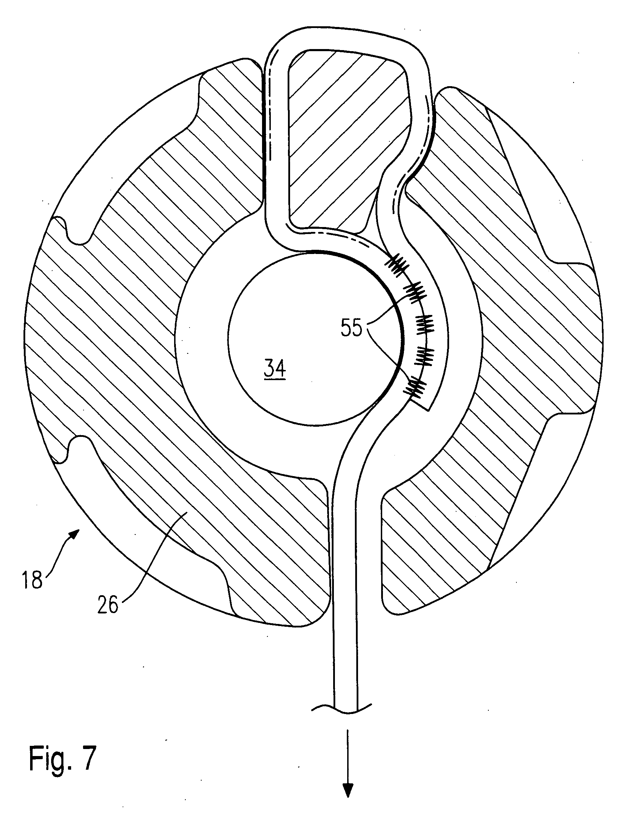

In den Figuren 6 und 7 ist ein Formteil mit einem Querschnitt dargestellt, der infolge der Zugkraft des Sicherheitsgurtes 14 an den durch die strichpunktierten Linien gekennzeichneten Abschnitten zu einer Klemmwirkung zwischen Formteil 52 und Spulenkörper 18 führt, so daß die Belastung der Verbindungsstelle 55 des Endes 53 mit dem Sicherheitsgurt 14 weniger stark belastet ist oder im Idealfalle eine Verbindung sogar überflüssig wird. Dies hat den Vorteil, daß der Sicherheitsgurt an der Verbindungsstelle 55 flexibler bleibt und eine Verdickung des Gurtbandes vermieden ist. Damit kann zum einen der Sicherheitsgurt 14 leichter am Torsionsstab 34 vorbei durch den Freiraum 58 gefädelt werden, und zum anderen kann der Freiraum 58 kleiner ausgebildet sein und somit auch der Durchmesser des Spulenkörpers 18 verringert sein.

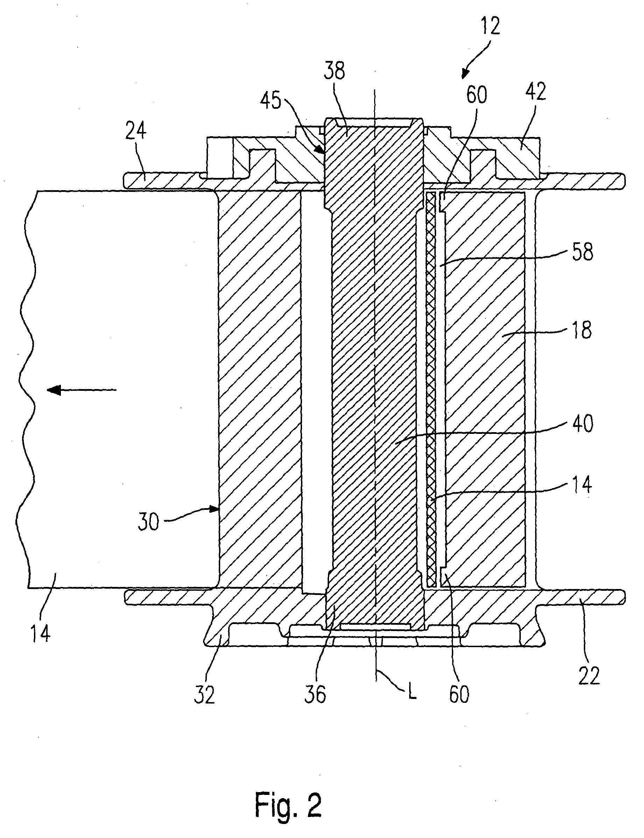

Wie in Figur 2 zu sehen ist, ist der Achsenabschnitt 40 des Torsionsstabes 34 mit einem Durchmesser versehen, der kleiner ist als der Durchmesser der Nabenabschnitte 36 und 38. Außerdem weist das Formteil 52 an seinen Enden jeweils Stütznasen 60 auf, mit denen es sich an den Nabenabschnitten 36 und 38 des Torsionsstabes 34 abstützt. Auf diese Weise wird vermieden, daß sich das Formteil 52 in der Mitte des Torsionsstabes 34 am Achsenabschnitt 40 abstützt und so die Torsionsmöglichkeit des Torsionsstabes 34 beeinträchtigt. Zur Erzielung dieser Wirkung kann auch nur eine der beschriebenen Maßnahmen, also entweder nur die Stütznasen 60 am Formteil 52 oder die unterschiedlichen Durchmesser von Achsenabschnitt 40 und Nabenabschnitt 36 bzw. 38, verwirklicht sein.

Bei der Montage der Gurtspule 12 wird die Schlaufe 54 durch den Schlitz 56 gefädelt, so daß sie am Torsionsstab 34 vorbei den Hohlraum 20 durchquert und durch die Ausnehmung 50 wieder austritt. Um das Durchfädeln zu erleichtern, kann der Freiraum 58 auf einer Seite des Torsionsstabes 34 erweitert sein, wie dies in Figur 3 gezeigt ist. In die offene Schlaufe 54, die aus der Ausnehmung 50 herausragt, kann dann das Formteil 52 eingelegt werden und durch Zug am Sicherheitsgurt 14 in der Ausnehmung 50 verklemmt werden.

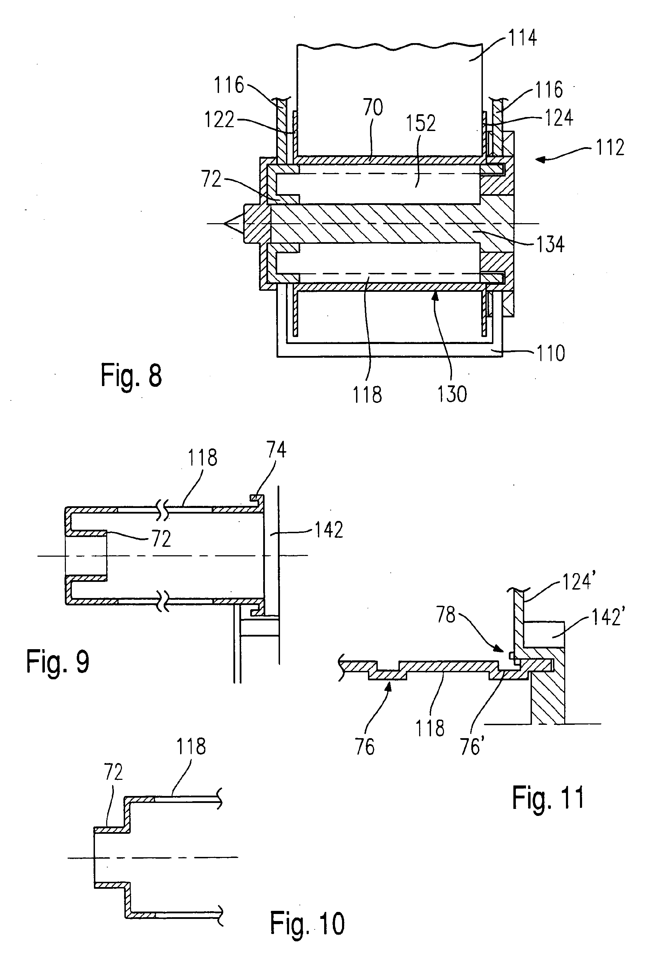

In Figur 8 ist eine weitere Ausführungsform gezeigt, bei der für bereits bekannte Bauteile um 100 erhöhte Bezugszeichen verwendet werden. Hier besteht die Gurtspule 112 aus einem Spulenkörper 118 beispielsweise aus einem dünnwandigen Stahlrohr als tragendem Element, welches von einer Hülle 70 aus leichtem und preiswertem Material, beispielsweise Kunststoff, umschlossen ist. Vorteilhafterweise können auch die Flansche 122 und 124 von der Hülle 70 gebildet sein, welche beispielsweise durch Umspritzen des Spulenkörpers 118 hergestellt sein kann, so daß sich Hülle 70 und Spulenkörper 118 nicht selbständig voneinander lösen können. An einem Ende des Spulenkörpers 118 ist eine Buchse 72 ausgebildet, in welche der erste Nabenabschnitt 136 des Torsionsstabes 134 drehfest eingepreßt ist.

Die Figuren 9 und 10 zeigen zwei Alternativen für die Ausbildung der Buchse 72, wobei die Buchse 72 in das Innere des Spulenkörpers 118 hinein (Figur 9) oder aus dem Spulenkörpers 118 heraus ragen kann (Figur 10). Am gegenüberliegenden Ende des Spulenkörpers 118 ist der Rand umgebördelt, so daß in eine Abschlußsicke 74 gebildet ist, auf welcher das Sperrad 142 drehbar gelagert ist.

Vorteilhafterweise ist der Spulenkörper 118 an seinem Umfang mit radialen Versteifungssicken 76 versehen, um den einschnürenden Kräften des Sicherheitsgurtes 114 wiederstehen zu können.

Der Torsionsstab 134 längt sich bei der Torsion und übt damit axiale Kräfte auf das Sperrad 142 aus. Um zu vermeiden, daß sich das Sperrad 142 infolge dieser Kräfte vom Spulenkörper 118 löst, kann ein an dem Sperrad 142 angegossener Materialüberschuß 78 in eine in der Nähe des Randes des Spulenkörpers 118 gelegene Versteifungssicke 76' umgebördelt werden.

Vorteilhafterweise kann zweite Flansch 124' auch der direkt am Sperrad 142' ausgebildet sein, so daß Flansch 124' und Sperrad 142' ein Bauteil bilden.

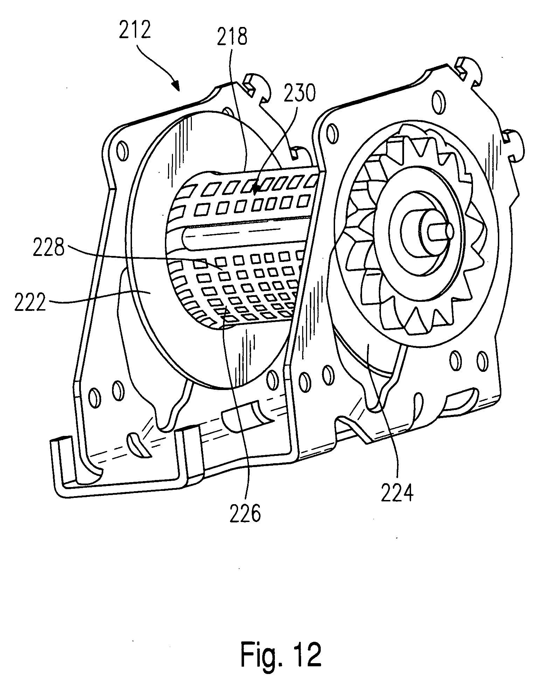

In Figur 12 ist eine weitere Ausführungsform gezeigt, bei der für bereits bekannte Bauteile um 200 erhöhte Bezugszeichen verwendet werden. Hier besteht die Gurtspule 212 aus einem Spulenkörper 218 aus Zinkdruckguß, bei dem die Flansche 222, 224 angegossen sind. Der Grundkörper 226 weist eine Gitterstruktur aus rechtwinklig zueinander angeordneten Rippen 228 auf, welche eine Trommelfläche 230 bilden. Dabei sind 80% aller Rippen 228 schmäler als 1,6 mm. Der Spulenkörper kann dadurch leichter als 150g sein. Alternativ kann Grundkörper 226 statt der Gitterstruktur auch eine Wabenstruktur aufweisen.

## Patentansprüche

1. Gurtaufroller mit einem Sicherheitsgurt (14; 114) und einer Gurtspule (12; 112; 212), wobei
die Gurtspule (12; 112; 212) einen Torsionsstab (34; 134) und einen Spulenkörper (18; 118; 218) umfaßt,
der Spulenkörper (18; 118; 218) eine Ausnehmung (50) aufweist,
in der Ausnehmung (50) ein Formteil (52; 152) vorgesehen ist, mit dem ein Ende (53) des Sicherheitsgurts (14; 114) in der Ausnehmung (50) befestigt werden kann, und
das Formteil (52; 152) am Torsionsstab (34; 134) anliegt, um sich abzustützen, wenn es durch die Zugkraft des Sicherheitsgurts (14; 114) belastet ist,
**dadurch gekennzeichnet, daß**
der Sicherheitsgurt (14; 114) in einem Freiraum (58) zwischen dem Torsionsstab (34; 134) und dem Spulenkörper (18; 118; 218) am Torsionsstab (34; 134) vorbeigeführt ist, und
im Spulenkörper (18; 118; 218) ein Schlitz (56) für den Gurtbandaustritt vorgesehen ist, der mindestens annähernd diametral gegenüber der Ausnehmung (50) angeordnet ist.

2. Gurtaufroller nach Anspruch 1, **dadurch gekennzeichnet, daß** der Torsionsstab (34) zwei Nabenabschnittte (36, 38) aufweist, mit denen er an dem Spulenkörper (18) angreift, und einen Achsenabschnitt (40), der die beiden Nabenabschnitte miteinander verbindet, wobei sich das Formteil (52) nur an den Nabenabschnitten am Torsionsstab abstützt.

3. Gurtaufroller nach Anspruch 2, **dadurch gekennzeichnet, daß** der Achsenabschnitt (40) des Torsionsstabes (34) einen geringeren Durchmesser aufweist als die Nabenabschnitte (36, 38).

4. Gurtaufroller nach Anspruch 2 oder 3, **dadurch gekennzeichnet, daß** das Formteil (52) an seinen Enden jeweils Stütznasen (60) aufweist, mit denen es sich an den Nabenabschnitten (36, 38) des Torsionsstabes (34) abstützt.

5. Gurtaufroller nach einem der vorhergehenden Ansprüche, **dadurch gekennzeichnet, daß** der Spulenkörper (118) ein tragendes Element aus Metall aufweist, welches von einer Hülle (70) aus Kunststoff umschlossen ist.

6. Gurtaufroller nach Anspruch 5, **dadurch gekennzeichnet, daß** die Hülle (70) auf das tragende Element aufgespritzt ist.

7. Gurtaufroller nach einem der Ansprüche, 1 bis 4, **dadurch gekennzeichnet, daß** der Spulenkörper (218) aus Zinkdruckguß besteht und sein Gewicht kleiner als 150 g ist.

8. Gurtaufroller nach Anspruch 7, **dadurch gekennzeichnet, daß** der Spulenkörper (218) eine Gitter- oder Wabenstruktur aufweist.

9. Gurtaufroller nach Anspruch 8, **dadurch gekennzeichnet, daß** die Gitteroder Wabenstruktur von Rippen (228) gebildet sind, von denen 80% schmäler als 1,6 mm sind.

10. Gurtaufroller nach einem der vorhergehenden Ansprüche, **dadurch gekennzeichnet, daß** ein Ende (53) des Sicherheitsgurtes (14) eine Schlaufe (54) bildet, welche das Formteil (52) umschließt.

11. Gurtaufroller nach Anspruch 10, **dadurch gekennzeichnet, daß** das Ende (53) des Sicherheitsgurtes (14) verschweißt ist, um die Schlaufe (54) zu bilden.

12. , Gurtaufroller nach Anspruch 10, **dadurch gekennzeichnet, daß** das Ende (53) des Sicherheitsgurtes (14) verklebt ist, um die Schlaufe (54) zu bilden.

13. Gurtaufroller nach einem der Ansprüche 10 bis 12, **dadurch gekennzeichnet, daß** die Linie zwischen dem Schnittpunkt (S) der Mittellinie der Ausnehmung (50) mit der Umfangslinie der Gurtspule und der Mittelachse (L) der Gurtspule den Querschnitt des Formteils (52) schneidet oder wenigstens tangiert.

14. Gurtaufroller nach Anspruch 13, **dadurch gekennzeichnet, daß** der Abstand zwischen der Linie S-L und einer parallelen Tangente an den Umfang des Formteils (52) größer als 1 mm ist.

15. Gurtaufroller nach einem der Ansprüche 10 bis 14, **dadurch gekennzeichnet, daß** die projizierte Stützbreite des Formteils (52) mindestens 7 mm beträgt, wobei kein Gurtumlenker im Gurtsystem vorgesehen ist.

16. Gurtaufroller nach Anspruch 15, **dadurch gekennzeichnet, daß** die projezierte Breite des Formteils (52) mindestens 5,5 mm bei einer Festigkeit des Formteils von 900 N/mm² beträgt.

17. Gurtaufroller nach einem der Ansprüche 10 bis 14, **dadurch gekennzeichnet, daß** die projizierte Stützbreite des Formteils (52) mindesten 9 mm beträgt, wobei ein Gurtumlenker im Gurtsystem vorgesehen ist.

18. Gurtaufroller nach Anspruch 17, **dadurch gekennzeichnet, daß** die projezierte Breite des Formteils (52) mindestens 7 mm bei einer Festigkeit des Formteils von 900 N/mm² beträgt.
